# EUROPÄISCHE PATENTSCHRIFT

(11) **EP 2 727 475 B1**
(45) Veröffentlichungstag und Bekanntmachung des Hinweises auf die Patenterteilung: **10.05.2017**
(21) Anmeldenummer: 12190920.4
(22) Anmeldetag: 31.10.2012
(51) Int. Cl.: C12C 7/04, C12C 7/14, C12H 1/04, A23L 2/38, A23L 2/52, C12C 11/00, A23L 2/80, C12H 1/044

(54) **Verwendung von Silikatpartikeln bei der Getränkeherstellung**
Use of silicate particles in the process of making a beverage
Utilisation de particules de silicate lors de la fabrication de boissons

(43) Veröffentlichungstag der Anmeldung: 07.05.2014
(73) Patentinhaber: ERBSLÖH Geisenheim AG, 65366 Geisenheim (DE)
(72) Erfinder: Fröhlich, Jürgen, 55130 Mainz (DE); Müller, Volker, 66426 Homburg (DE); Besier, Anne, 65388 Schlangenbad (DE)
(74) Vertreter: WSL Patentanwälte Partnerschaft mbB

(56) Entgegenhaltungen:
- WO-A1-02/070643
- GB-A- 465 692
- GB-A- 1 073 924
- US-A- 2 433 411
- US-A- 4 338 348
- US-A- 4 652 452
- NARZISS L ET AL: "Studies on the gushing problem. (translated)", MONATSSCHRIFT FUER BRAUWISSENSCHAFT, CARL, NUERNBERG, DE, Bd. 43, Nr. 9, 1. Januar 1990 (1990-01-01) , Seiten 296-305, XP008156111, ISSN: 0723-1520
- KARIMI L ET AL: "The role of bentonite particle size distribution on kinetic of cation exchange capacity", JOURNAL OF INDUSTRIAL AND ENGINEERING CHEMISTRY, THE KOREAN SOCIETY OF INDUSTRIAL AND ENGINEERING CHEMISTRY, KOREA, Bd. 17, Nr. 1, 12. Juli 2010 (2010-07-12), Seiten 90-95, XP028166611, ISSN: 1226-086X, DOI: 10.1016/J.JIEC.2010.12.002 [gefunden am 2010-12-25]

## Beschreibung

Die vorliegende Erfindung betrifft die Verwendung eines partikulären Materials bei der Herstellung eines Getränks, wobei die Materialpartikel im Laufe des Herstellungsprozesses einem Ausgangsmaterial oder einem Zwischenprodukt des Getränks zugesetzt und anschließend vor der Fertigstellung des Getränks wieder abgetrennt werden. Die vorliegende Erfindung betrifft auch ein Verfahren zum Herstellen eines Getränks, bei dem man die Partikel im Sinne der vorliegenden Erfindung in der oben angegebenen Weise einsetzt.

Es gibt einige Bestandteile der bei der Herstellung von Getränken eingesetzten Ausgangsmaterialien, die den Ablauf des Produktionsprozesses oder die Qualität des Endprodukts nachhaltig beeinträchtigen können. Beispielsweise tritt beim Öffnen von Bierflaschen häufig das sogenannte Gushing auf.

Als Gushing bezeichnet man ein unkontrolliertes plötzliches Entweichen von Schaum und Bier beim Öffnen einer Bierflasche, das nicht durch hohe Temperaturen oder Schütteln verursacht wird. Dieses Phänomen tritt immer wieder in ganzen Bierchargen auf und ist für den Verbraucher äußerst unangenehm. Als Gushing-Ursachen werden verschiedene Faktoren diskutiert.

Auslöser des sogenannten primären Gushings sind Hydrophobine und weitere Pilzmetaboliten (polare Lipide, proteolytische Abbauprodukte von Lipotransferproteinen (LPT)), die sich an Phasengrenzflächen anlagern und deren Grenzflächenenergie modifizieren, was sich auf das Wachstum von Kristallen aus wässriger Lösung auswirkt.

Hydrophobine sind kleine oberflächenaktive, amphiphile Proteine (ca. 100 Aminosäuren), die insbesondere von fadenförmigen Pilzen der Gattung Fusarium ausgeschieden werden und über mit diesen Pilzen befallenes Getreide in das Bier gelangen. Sie aggregieren spontan zu sehr stabilen, monomolekularen Membranen und neigen zur Mizellenbildung. GB465692 betrifft die Verwendung von Silikatpartikeln zur Entfernung von kolloidal gelösten Trübungssubstanzen mit Protein-artigen Eigenschaften.

Das sekundäre oder technologische Gushing wird durch verfahrenstechnisch bedingte Calciumoxalat-Ausfällungen und Metallionen, wie z.B. Fe³⁺, verursacht. Mitunter sind allerdings auch Spülmittelreste sowie raue Oberflächen der Gebinde bzw. Flaschen als Verursacher von Gushing gefunden worden.

Oxalsäure ist im Malz in hohen Konzentrationen vorhanden. In der Würze liegt Oxalsäure im Bereich <60 mg/l, im Bier immer noch im Bereich <25 mg/l vor. Fällt diese Oxalsäure in Form von Calciumoxalaten aus, bilden sich viele Kristallisationskeime für die Gasblasenbildung. Je größer die Anzahl der Partikel, desto höher das Gasbildungspotential.

Über die Hälfte der Brauereien haben schon einmal Probleme mit dem Phänomen Gushing gehabt. Betroffen waren dabei alle 5 umsatzstarken Hauptbiersorten wie Pils, Helles, Export und Weizenbier. Da Gushing nicht nur zu einem Imageverlust bei Brauereien führt, sondern davon auch indirekt alle Mälzereien betroffen sind, ist sowohl die Brauindustrie als auch die Malzindustrie sehr an Methoden und Verfahren zur Vermeidung von Gushing interessiert.

Bisher gibt es kein abgesichertes Verfahren, das Gushing ausreichend verhindern könnte. Trotz neuer Erkenntnisse zur Ursache des Gushing ist es bisher nicht gelungen, dessen Auftreten in der Industrie zu kontrollieren.

Zwar ist Hopfen für seine leicht Gushing-unterdrückende Wirkung bekannt, sodass teilweise versucht wird, durch Zugabe von isomerisierten Hopfenölen zum Brauprozess das Problem zu verringern. Ein Nachteil dieses Ansatzes besteht allerdings darin, dass das Bieraroma durch die Erhöhung des Hopfenanteils deutlich beeinflusst wird. In Deutschland ist die Erhöhung des Hopfenanteils außerdem aufgrund des Reinheitsgebotes nicht erlaubt.

Da das Auftreten von Hydrophobinen sehr stark witterungsabhängig ist, sind manche Gersten- und damit Malz-Jahrgänge stärker betroffen als andere. Häufig werden daher verschiedene Malzchargen verschnitten, um zumindest das primäre Gushing zu minimieren. Dies bedeutet jedoch für die Mälzereien einen erhöhten Lagerungsaufwand, wenn verschiedene Malzchargen aus verschiedenen Jahrgängen mit unterschiedlichem Gushing-Potential verschnitten werden sollen. Zudem gibt es momentan kein sicheres überzeugendes Testverfahren zur Bestimmung des Gushing-Potentials von Malz.

Der CO₂-Entbindung an Calciumoxalatausfällungen wird oft dadurch entgegengewirkt, dass man beim Einmaischen über das Brauwasser lösliche Calciumsalze (CaSO₄, CaCl₂) zudosiert. Während der Kaltlagerungsphase des Jungbieres wird dann schwerlösliches Calciumoxalat ausgefällt, das dann mit der sedimentierten Hefe bzw. im Filtrationsprozess gezielt entfernt werden kann. Diese Methode ist jedoch mit dem Nachteil verbunden, dass die Calciumsalze sehr hoch dosiert werden müssen (CaSO₄ : Ca-Oxalat im Verhältnis > 5:1). Der Gesamtsalzgehalt des späteren Bieres wird hierdurch merklich verändert. Außerdem beeinflussen CaCl₂ und CaSO₄ die Geschmacksnote des Bieres deutlich. CaCl₂ kann zudem zu Chloridkorrosionen bei Edelstahl führen.

Insbesondere begünstigt durch den Umstand, dass das zugegebene Calciumsalz den pH-Wert senkt, was die Löslichkeit von Calciumoxalat erhöht und damit der vollständigen Fällung von Calciumoxalat entgegenwirkt, besteht darüber hinaus die Gefahr, das nicht gefällte Ca²⁺-Ionen und Oxalsäure über die Filter geschleppt werden. Dies kann eine weitere Ausfällung von Calciumoxalat nach der Filtration nach sich ziehen, welches nach der Abfüllung in Flaschen zu einer unerwünschten Trübung des Bieres führen bzw. Gushing auslösen kann. Dieser Effekt kann insbesondere durch zusätzliche Calcium-Aufnahme aus dem Kieselgur des Filters verstärkt werden.

Zusammenfassend lässt sich festhalten: Es existiert bisher kein sicheres und verlässliches Verfahren, das Gushing verhindern kann. Die existierenden Verfahren erfordern einen zusätzlichen Verfahrensschritt oder greifen deutlich in das Aromaprofil des Bierproduktes ein.

Auch bei anderen Getränken, wie z.B. bei der Weinerzeugung oder bei der Herstellung von Fruchtsäften gibt es in den bei der Herstellung dieser Getränke eingesetzten Ausgangsmaterialien Bestandteile, die den Ablauf des Produktionsprozesses oder die Qualität des Endprodukts nachhaltig beeinträchtigen können, wie z.B. hohe Weinsäuregehalte im Most oder hohe Gehalte an anderen Fruchtsäuren im Saft verschiedener Obstsorten.

Die Aufgabe der vorliegenden Erfindung besteht daher darin, für die Getränkeproduktion eine Möglichkeit bereitzustellen, mit der es gelingt, die im Produktionsprozess oder im Endprodukt unerwünschten Bestandteile der Ausgangsmaterialien, wie z.B. Fruchtsäuren, Proteine oder polare Lipide, mit möglichst wenig Aufwand und kostengünstig zu reduzieren oder gar vollständig zu entfernen, ohne dabei das Aromaprofil des Produktes merklich zu beeinträchtigen.

Diese Aufgabe wird erfindungsgemäß gelöst durch die Verwendung eines partikulären Materials bei der Herstellung eines Getränks, wobei die Materialpartikel im Laufe des Herstellungsprozesses einem Ausgangsmaterial oder einem Zwischenprodukt des Getränks zugesetzt und anschließend vor der Fertigstellung des Getränks wieder abgetrennt werden, wobei die Partikel des Materials dadurch gekennzeichnet sind, dass die Partikel des Materials Silikatpartikel sind, die bezogen auf das Gesamtgewicht der Partikel wenigstens zu 90 Gew.-% aus einem Silikat bestehen, wobei die Silikatpartikel bezogen auf das Gesamtgewicht der Partikel einen Anteil an dem Metallion Ca²⁺ in dem Bereich von 5 bis 30 Gew.-% aufweisen und wobei die Silikatpartikel an deren Oberfläche mit dem Metallion Ca²⁺ angereichert sind, wobei diese Anreicherung zu Silikatpartikeln führt, bei denen bezogen auf den Gesamtanteil des Metallions Ca²⁺ wenigstens 50 Gew.-% des Metallions Ca²⁺ auf der Oberfläche vorliegen. Bei besonders bevorzugten Ausführungsformen beträgt der Anteil des Metallions Ca²⁺ bezogen auf das Gesamtgewicht der Partikel wenigstens 8 Gew.-%. Bei insbesondere bevorzugten Ausführungsformen beträgt der Anteil des Metalllions Ca²⁺ bezogen auf das Gesamtgewicht der Partikel wenigstens 10 Gew.-%. Bei bestimmten Ausführungsformen beträgt der Anteil Metallions Ca²⁺ bezogen auf das Gesamtgewicht der Partikel sogar wenigstens 15 Gew.-%. oder gar wenigstens 20 Gew.-%.

Bei manchen Ausführungsformen kann es vorteilhaft sein, wenn der Anteil des Metallions Ca²⁺ bezogen auf das Gesamtgewicht der Partikel weniger als 30 Gew.-% beträgt. Bei bestimmten Ausführungsformen ist der Anteil des Metallions Ca²⁺ bezogen auf das Gesamtgewicht der Partikel auf maximal 25 Gew.-% oder gar nur 20 Gew.-% begrenzt.

Der Nachweis des Metalliongehalts der erfindungsgemäßen Partikel kann beispielsweise durch Atom-Absorptions-Spektrometrie (AAS) oder durch Massenspektrometrie mit induktiv gekoppeltem Plasma (ICP-MS) erfolgen.

Durch die erfindungsgemäß eingesetzten Silikatpartikel können unerwünschte oberflächenaktive Bestandteile aus den Ausgangsmaterialien oder Zwischenprodukten von Getränken mit relativ wenig Aufwand und kostengünstig entfernt werden, da diese unerwünschten Bestandteile an den Oberflächen der Silikatpartikel gebunden werden, sodass man durch anschließendes Abtrennen der Silikatpartikel im Laufe des Produktionsprozesses auch die an deren Oberflächen gebundenen Stoffe entfernt, ohne dabei das Aromaprofil des Produktes merklich zu beeinträchtigen.

Auf diese Weise können beispielsweise die beim Bierbrauen auftauchenden Hydrophobine, Proteasen und polaren Lipide entfernt werden, wodurch eine der wesentlichen Ursachen des Gushings beseitigt werden kann.

Der Vorteil der Verwendung von Silikatpartikeln mit einem Anteil an dem Metallion Ca²⁺ in den angegebenen Bereichen liegt darin, dass auf diese Weise auch im Produktionsprozess von Getränken oder im Endprodukt unerwünschte Fruchtsäuren mit relativ wenig Aufwand und kostengünstig reduziert oder gar vollständig entfernt werden können, ohne dabei das Aromaprofil des Produktes merklich zu beeinträchtigen, da die Fruchtsäuren, wie z.B. Oxalsäure, an die in den Silikatpartikeln vorliegenden Metallionen binden, sodass man durch anschließendes Abtrennen der Silikatpartikel im Laufe des Produktionsprozesses auch die an deren Oberflächen gebundenen Fruchtsäuren entfernen kann.
Mit den erfindungsgemäßen Silikatpartikeln können daher beispielsweise beim Bierbrauen die wesentlichen identifizierten Ursachen des Gushings beseitigt werden, nämlich hoher Oxalatgehalt sowie oberflächenaktive Hydrophobine und Proteasen.
Im Gegensatz zu der aus dem Stand der Technik bekannten Oxalatfällung mit Calciumchlorid oder Calciumsulfat haben die Silikatpartikel der vorliegenden Erfindung außerdem den entscheidenden Vorteil, dass die zugesetzten Partikel z.B. durch Filtrieren wieder vollständig entfernt werden können.
Im Übrigen wird durch Verwendung der erfindungsgemäßen Silikatpartikel der pH-Wert angehoben, wodurch die Löslichkeit der Salze aus den oben angegeben Metallen mit Fruchtsäuren stark abgesenkt wird. Dementsprechend wird die Ausfällung der entsprechenden Salze begünstigt. Im Übrigen ist die Anhebung des pH-Werts auch günstig für die Protein-Aggregation.
Unter Silikaten werden im Sinne der vorliegenden Erfindung Polykondensate der Ortho-Kieselsäure verstanden, wie z.B. Kieselsol und Kieselgur, aber auch alle Silikatminerale, wie z.B. Inselsilikate, Gruppensilikate, Ringsilikate, Ketten- und Bandsilikate, Schichtsilikate, Gerüstsilikate und amorphe Silikate.
Vorzugsweise bestehen die Silikatpartikel wenigstens zum Teil aus einem Schichtsilikat. Schichtsilikate (auch Blatt- oder Phyllosilikate) im Sinne der vorliegenden Erfindung sind Silikate deren Silikatanionen aus Schichten eckenverknüpfter SiO₄-Tetraeder bestehen, wobei die Schichten untereinander nicht über weitere Si-O-Bindungen verknüpft sind. Hierunter fallen erfindungsgemäß die Silikatminerale der Glimmer-, Chlorit- und Serpentingruppe sowie Kaolin und die Schichtsilikattonminerale.
Bei bestimmten Ausführungsformen der Erfindung bestehen die Silikatpartikel wenigstens zum Teil aus einem Schichtsilikattonmineral gebildet. Zu den Schichtsilikattonmineralen gehören die Minerale der Talk-Pyrophyllit-, der Smektit-, der Vermicullit- und der Glimmergruppe. Bei noch spezielleren Ausführungsformen der Erfindung ist das Schichtsilikattonmineral ein Mineral der Smektitgruppe, wie z.B. ein Montmorillonit, Beidellit, Nontronit, Saponit oder Hectorit.
Bei einer bevorzugten Ausführungsform der vorliegenden Erfindung bestehen die Silikatpartikel wenigstens zum Teil aus einem Montmorillonitton.
Bei einer besonders bevorzugten Ausführungsform bestehen die Silikatpartikel wenigstens zum Teil aus montmorillonittonhaltigem Bentonit.
Die erfindungsgemäß eingesetzten Silikatpartikel liegen vorzugsweise in der Form eines Pulvers oder Granulats vor.
Die Formulierung "die Silikatpartikel bestehen wenigstens zum Teil aus" umfasst im Sinne der vorliegenden Erfindung solche Ausführungsformen, bei denen die Partikel bezogen auf das Gesamtgewicht der Partikel zu 90 Gew.-%, 92 Gew.-%, 95 Gew.-%, 98 Gew.-%, 98,5 Gew.-%, 99 Gew.-% oder 100 Gew.-% aus dem angegebenen Silikatmaterial bestehen.
Um die oben beschriebenen Vorteile der erfindungsgemäßen Silikatpartikel mit den genannten Anteilen an dem Metallion Ca²⁺ zu erreichen, sind bei den Silikatpartikeln, die diese Anteile nicht von Hause aus mit sich bringen, die Silikatpartikel vorzugsweise mit dem Metallion Ca²⁺ angereichert.

Unter dem Begriff "anreichern" wird dabei die Erhöhung des Anteils des Metallions Ca²⁺ gegenüber dem Anteil des Metallions Ca²⁺ an dem "ursprünglichen" Silikatpartikel verstanden. Haben beispielsweise Silikatpartikel, die von einem Bentonit gebildet werden, von Hause aus bezogen auf das Gesamtgewicht der Partikel einen Ca-Gehalt von 1 Gew.-%, so liegt ein angereicherter Silikatpartikel im Sinne der vorliegenden Erfindung dann vor, wenn bezogen auf das Gesamtgewicht der Partikel eine Erhöhung des ursprünglichen Ca-Gehalts der Silikatpartikel auf über 1 Gew.-% Ca, wie z.B. auf 1,5 Gew.-% Ca, vorliegt. Die Silikatpartikel der vorliegenden Erfindung sind an deren Oberfläche mit dem Metallion Ca²⁺ angereichert, wobei diese Anreicherung zu Silikatpartikeln führt, bei denen bezogen auf den Gesamtanteil des Metallions Ca²⁺ wenigstens 50 Gew.-% dieses Metallions auf der Oberfläche vorliegen. Vorzugsweise liegen bezogen auf den Gesamtanteil des Metallions Ca²⁺ wenigstens 60 Gew.-%, wenigstens 70 Gew.-%, wenigstens 80 Gew.-%, wenigstens 90 Gew.-%, wenigstens 95 Gew.-% oder gar wenigstens 99 Gew.-% auf der Oberfläche vor. Die Silikatpartikel der vorliegenden Erfindung induzieren insbesondere durch deren Anteil an dem Metallion Ca²⁺ in den angegebenen Bereichen als Kristallisationskeime die Ausbildung von Metall-Fruchtsäure-Kristallen, wie z.B. von Oxalatkristallen. Diese Kristalle wachsen sehr gut und schnell auf den Silikatpartikeln auf, da die Silikatpartikel der vorliegenden Erfindung eine große Oberfläche aufweisen.
Um einen möglichst große Kontaktfläche mit den zu behandelnden Ausgangsmaterialien oder Zwischenprodukten zu erreichen, weisen bestimmte Ausführungsformen der erfindungsgemäßen Silikatpartikel eine BET-Oberfläche in dem Bereich von 5-850 m²/g auf. Vorzugsweise ist die BET-Oberfläche > 100 m²/g, noch bevorzugter > 250 m²/g und insbesondere bevorzugt > 500 m²/g, wobei die Bestimmung der BET-Oberfläche mittels Stickstoffadsorption bei einer Temperatur von 77 K nach DIN ISO 9277:2003-05 durchgeführt wird.
Bei bestimmten Ausführungsformen der Erfindung sind die Silikatpartikel dadurch gekennzeichnet, dass sie eine Kationenaustauschkapazität (CEC) von 5 bis 100 meq/100g aufweisen, wobei die Kationenaustauschkapazität nach dem Verfahren erfolgt, dass von Dohrmann und Kaufhold in "Determination of exchangeable calcium of calcareous and gypsiferous bentonites" im Jahre 2010 in "Clays and Clay Minerals" Vol. 58, S. 513-522 beschrieben wird. Vorzugsweise liegt die Kationenaustauschkapazität bei <75 meq/100g, noch bevorzugter bei < 60 meq/100g.

Bei bestimmten Ausführungsformen der Erfindung sind die Silikatpartikel dadurch gekennzeichnet, dass die Silikatpartikel bezogen auf das Gesamtgewicht der Partikel einen Anteil an Fe (II) <10 Gew.-% aufweisen. Bei bevorzugten Ausführungsformen weisen die Silikatpartikel bezogen auf das Gesamtgewicht der Partikel einen Anteil an Fe (II) <1 Gew.-% auf. Noch bevorzugter beträgt der Anteil an Fe (II) in den Silikatpartikeln bezogen auf das Gesamtgewicht der Partikel <1 Gew.-%.

Von der vorliegenden Erfindung umfasst ist auch ein Verfahren zum Herstellen eines Getränks, bei dem man die Silikatpartikel im Sinne der vorliegenden Erfindung im Laufe des Herstellungsprozesses einem Ausgangsmaterial oder einem Zwischenprodukt des Getränks zugesetzt und anschließend vor der Fertigstellung des Getränks wieder abgetrennt.

Beispiele für Getränkeherstellungsverfahren, bei denen die Silikatpartikel im Sinne der vorliegenden Erfindung zum Einsatz kommen sind die Weinerzeugung, die Produktion von Fruchtsäften und das Bierbrauen. Hierbei können die Silikatpartikel erfindungsgemäß in verschiedenen Phasen des Herstellungsprozesses einem Ausgangsmaterial oder einem Zwischenprodukt des Getränks zugesetzt und anschließend vor der Fertigstellung des Getränks wieder abgetrennt werden, wobei der Zeitpunkt des Zusetzens und der Zeitpunkt des anschließenden Abtrennens von dem jeweiligen Getränk und dem individuellen Herstellungsprozess abhängt. Die notwendigen Dosagen richten sich nach dem eingesetzten Brauwasser und liegen in dem Bereich von 80 bis 120 g/hl Maische, vorzugsweise bei 100 g/hl Maische.

Bei einem bevorzugten Bierbrauprozess, bei dem man Silikatpartikel mit den oben angegebenen Merkmalen verwendet, werden die Silikatpartikel der Erfindung zur Maische zugegeben. Bei einer bevorzugten Ausführungsform werden die Partikel über das Brauwasser zur Maische zugegeben werden. Bei einer speziellen Ausführungsform werden die Silikatpartikel zusätzlich auch zum Gärprozess zugegeben. Die Abtrennung der Silikatpartikel erfolgt beim Bierbrauen vorzugsweise beim Läutern zusammen mit dem Malztreber und/oder beim Filtrieren nach dem Gärprozess.

Durch die Anwendung des erfindungsgemäßen Verfahrens beim Bierbrauen können die angenommenen Ursachen des unkontrollierten Überschäumens von Bier, nämlich hoher Oxalatgehalt und oberflächenaktive Hydrophobine und Proteasen, bereits während des Maischeprozesses aus der Würze entfernt werden. Die restliche Nachfällung kann bei der abschließenden Hefeabtrennung bzw. Filtration beseitigt werden.

Erfindungsgemäß werden die Silikatpartikel vorzugsweise vor oder während des Maischeprozesses eingebracht. In der Maische reagieren die Silikatpartikel mit der vorhandenen Oxalsäure, und die Oxalsäure fällt nahezu komplett als Ca-Oxalat an die Silikatpartikel gebunden aus. Zusätzlich heben die Silikatpartikel den pH-Wert des Brauwassers an und senken damit die Löslichkeit von Calciumoxalat, was dessen Ausfällung begünstigt. Das ausgefällte Oxalat kann damit schon bei der Läuterung zusammen mit den Malztrebern entfernt werden.

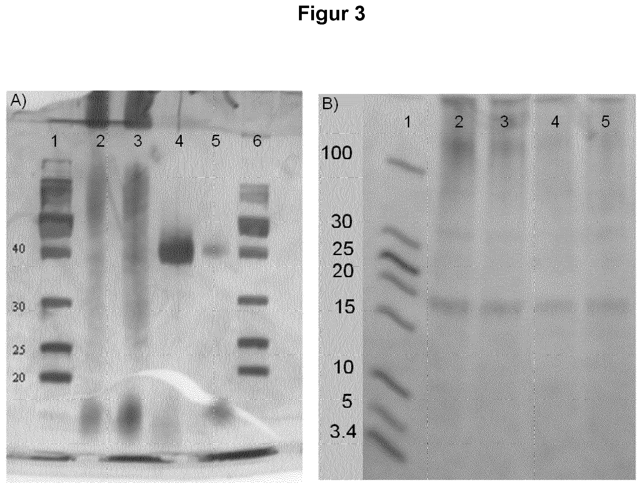

Normalerweise wird für die Maische ein Brauwasser im pH-Bereich 5,2 bis 5,4 verwendet. Mit dem hier vorgeschlagenen Verfahren wird der pH-Wert des Brauwassers auf bis zu pH > 5,8 angehoben. Diese pH-Wert-Verschiebung senkt nicht nur die Löslichkeit von Calciumoxalat sondern vermindert gleichzeitig auch die Aggregation des 17 kD Hydrophobins und damit insgesamt das Gushing-Potential. Darüber hinaus werden Hydrophobine und Proteasen schon in der Maische reduziert und bei der Läuterung aus der Würze entfernt (vgl. Fig. 3).

Die ausgefällten Produkte werden damit zum Großteil bereits bei der Läuterung fast vollständig mit dem Treber entfernt, so dass kein zusätzlicher Verfahrensschritt notwendig wird.

Daneben gibt es noch eine ganze Reihe weiterer Vorteile der Verwendung der erfindungsgemäßen Silikatpartikel beim Bierbrauen gegenüber dem Stand der Technik.

So folgt durch die Schwerlöslichkeit der eingesetzten Stoffe nahezu keine mineralische Veränderung des Bieres und somit auch keine sensorische Beeinträchtigung. Bei professionellen Verkostungen (DLG Schema) wurden die, mit dem neuen Verfahren behandelten Biere im Vergleich mit den herkömmlich behandelten Bieren sogar mit einer höheren "Drinkability" bewertet.

Außerdem lagen die Hopfenausbeuten der mit den erfindungsgemäßen Silikatpartikeln behandelten Biere um ca. 8-10% höher als die der Standardbiere. Bei den Versuchsreihen waren auch bessere Schaumstabilitäten feststellbar. Gleichzeitig wurde keinerlei Verringerung der chemischphysikalischen Haltbarkeit der Biere festgestellt, und es konnte auch keinerlei Ausbeuteverschlechterung (Extrakt) aufgrund des etwas höheren pH-Wertes der Maische festgestellt werden.

Im übrigen sind die erfindungsgemäßen Silikatpartikel konform mit dem deutschen Reinheitsgebot, gemäß der Bayrischen Landesordnung von 1516.

Für Zwecke der ursprünglichen Offenbarung wird darauf hingewiesen, dass sämtliche Merkmale, wie sie sich aus der vorliegenden Beschreibung, den Figuren und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass die nachfolgenden Ausführungsbeispiele lediglich dazu dienen, die als Ausführungsbeispiele wiedergegebenen möglichen Ausführungsformen der vorliegenden Erfindung beispielhaft anzugeben. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen.

Von den dieser Anmeldung anhängenden Figuren zeigen:
- Figur 1:: REM-Phasenkontrastbilder von erfindungsgemäßen Silikatpartikeln auf Basis von reinem Silikat,
- Figur 2:: REM-Phasenkontrastbilder von erfindungsgemäßen Silikatpartikeln auf Basis von Bentonit und
- Figur 3:: das Ergebnis einer Hydrophobin-Analytik mittels SDS-PAGE.

### Beispiele

### 1. Untersuchung der Fällung durch Rasterelektronenmikroskopie (REM)

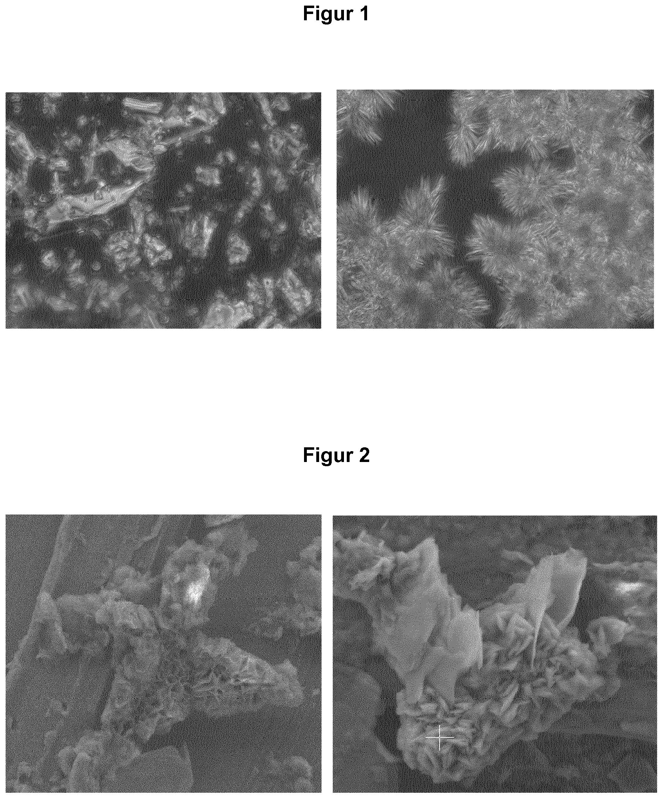

Das Aufwachsen von Ca-Oxalat-Kristallen auf der Oberfläche der Silikatpartikel wurde im REM untersucht (vgl. Fig. 1 und Fig. 2). Hierfür wurden die Proben (1 ml) vor der Untersuchung zentrifugiert (10000 U/min) und mit autoklaviertem, entsalztem Wasser gewaschen, wiederholt zentrifugiert und auf 100 µl aufgefüllt (ca. 10-fach Konzentrierung). Anschließend wurden jeweils 10 µl der gereinigten Suspensionen auf Aluminiumträger verteilt. Die Proben wurden anschließend bei 50 °C unter Vakuum (Membranpumpe: 13 mbar; Druckgradient: 1013 mbar/13 mbar/30 min) getrocknet. Die nahezu salzfreien Proben wurden nach dem Trocknen direkt ohne Bedampfung im Rasterelektronenmikroskop untersucht. Hierbei wurden die Gehalte der Elemente (C, O, Na, K, Si, Fe, Ca, Al) für die Berechnung der Zusammensetzung der jeweiligen Struktur, durch die im Gerät integrierte Röntgenfluoreszenztechnologie, gemessen.

Im Einzelnen sind in der Figur 1 Phasenkontrastbilder (200x) dargestellt von:
links: Ca-Silikatpartikel auf Basis von reinem Silikat (Kieselsäure) vor der Anwendung
rechts: Aufwachsen von Ca-Oxalat auf der Oberfläche der Partikel nach der Anwendung

Im Einzelnen sind in der Figur 2 Phasenkontrastbilder (200x) dargestellt von:
links: Ca-Bentonit-Partikel vor der Anwendung
rechts: Aufwachsen von Ca-Oxalat auf der Oberfläche der Partikel nach der Anwendung (weißes Kreuz = Ca-Oxalat)

### 2. Hydrophobin-Bindeaktivität an Silikatpartikel

Die Hydrophobin-Bindeaktivität an Silikatpartikel wurde mittels SDS-PAGE untersucht. Hierbei konnte bei einer Dosage von 100 g/hl eine Abreicherung um < 30% erreicht werden. Die Analytik wurde mit einem Hydrophobin-Zellextrakt aus Fusarien durchgeführt (Figur 3).

Das Hydrophobin zeigt eine Bande bei ca. 17 kDa (Fig. 3, links), sowie eine weitere Dimerbande bei 40 kDa.

Im Einzelnen sind in der Figur 3 dargestellt:
links: 1) Marker 10 µl, 2) Hydrophobin (1:50) 6 µl, 3) Hydrophobin (1:20) 6 µl,
   4) Würze 18 µl, 5) Bier 18 µl, 6) Marker 6 µl
rechts: 1) Marker 5 µl, 2)+3) Hydrophobin-haltiges Bier, 3)+4) Hydrophobin-haltiges Bier nach Silikatpartikel-Behandlung

## Patentansprüche

1. Verwendung eines partikulären Materials bei der Herstellung eines Getränks, wobei die Materialpartikel dieses Materials im Laufe des Herstellungsprozesses einem Ausgangsmaterial oder einem Zwischenprodukt des Getränks zugesetzt und anschließend vor der Fertigstellung des Getränks wieder abgetrennt werden, **dadurch gekennzeichnet, dass** die Partikel des Materials Silikatpartikel sind, die bezogen auf das Gesamtgewicht der Partikel wenigstens zu 90 Gew.-% aus einem Silikat bestehen, wobei die Silikatpartikel bezogen auf das Gesamtgewicht der Partikel einen Anteil an dem Metallion Ca²⁺ in dem Bereich von 5 bis 30 Gew.-% aufweisen und wobei die Silikatpartikel an deren Oberfläche mit dem Metallion Ca²⁺ angereichert sind, wobei diese Anreicherung zu Silikatpartikeln führt, bei denen bezogen auf den Gesamtanteil des Metallions Ca²⁺ wenigstens 50 Gew.-% des Metallions Ca²⁺ auf der Oberfläche vorliegen.

2. Verwendung nach Anspruch 1, **dadurch gekennzeichnet, dass** die Silikatpartikeln bezogen auf das Gesamtgewicht der Partikel wenigstens zu 90 Gew.-% aus einem Schichtsilikat bestehen.

3. Verwendung nach Anspruch 1 oder 2, **dadurch gekennzeichnet, dass** die Silikatpartikel bezogen auf das Gesamtgewicht der Partikel wenigstens zu 90 Gew.-% aus einem Montmorillonitton bestehen.

4. Verwendung nach einem der Ansprüche 1 bis 3, **dadurch gekennzeichnet, dass** die Silikatpartikel bezogen auf das Gesamtgewicht der Partikel wenigstens zu 90 Gew.-% aus Bentonit bestehen.

5. Verwendung nach einem der vorstehenden Ansprüche, **dadurch gekennzeichnet, dass** die Silikatpartikel eine BET-Oberfläche in dem Bereich von 5 bis 850 m²/g aufweisen.

6. Verwendung nach einem der vorstehenden Ansprüche, **dadurch gekennzeichnet, dass** die Silikatpartikel eine Kationenaustauschkapazität (CEC) von 5 bis 100 meq/100g aufweisen.

7. Verwendung nach einem der vorstehenden Ansprüche, **dadurch gekennzeichnet, dass** die Silikatpartikel bezogen auf das Gesamtgewicht der Partikel einen Anteil an Fe (II) <10 Gew.-% aufweisen.

8. Verfahren zum Bierbrauen, bei dem man Silikatpartikel im Laufe des Herstellungsprozesses einem Ausgangsmaterial oder einem Zwischenprodukt des Getränks zusetzt und anschließend vor der Fertigstellung des Getränks wieder abtrennt, **dadurch gekennzeichnet, dass** die Silikatpartikel, bezogen auf das Gesamtgewicht der Partikel wenigstens zu 90 Gew.-% aus einem Silikat bestehen, wobei die Silikatpartikel bezogen auf das Gesamtgewicht der Partikel einen Anteil an dem Metallion Ca²⁺ in dem Bereich von 5 bis 30 Gew.-% aufweisen und wobei die Silikatpartikel an deren Oberfläche mit dem Metallion Ca²⁺ angereichert sind, wobei diese Anreicherung zu Silikatpartikeln führt, bei denen bezogen auf den Gesamtanteil des Metallions Ca²⁺ wenigstens 50 Gew.-% des Metallions Ca2+ auf der Oberfläche vorliegen.

9. Verfahren zum Bierbrauen, bei dem man Silikatpartikel verwendet, **dadurch gekennzeichnet, dass** die Silikatpartikel zur Maische zugegeben werden, und dass die Silikatpartikel, bezogen auf das Gesamtgewicht der Partikel wenigstens zu 90 Gew.-% aus einem Silikat bestehen, wobei die Silikatpartikel bezogen auf das Gesamtgewicht der Partikel einen Anteil an dem Metallion Ca²⁺ in dem Bereich von 5 bis 30 Gew.-% aufweisen und wobei die Silikatpartikel an deren Oberfläche mit dem Metallion Ca²⁺ angereichert sind, wobei diese Anreicherung zu Silikatpartikeln führt, bei denen bezogen auf den Gesamtanteil des Metallions Ca²⁺ wenigstens 50 Gew.-% des Metallions Ca²⁺ auf der Oberfläche vorliegen.

10. Verfahren nach Anspruch 9, **dadurch gekennzeichnet, dass** die Silikatpartikel über das Brauwasser zur Maische zugegeben werden.

11. Verfahren nach einem der Ansprüche 9 oder 10, **dadurch gekennzeichnet, dass** die Silikatpartikel zusätzlich auch zum Gärprozess zugegeben werden.

12. Verfahren nach einem der Ansprüche 9 bis 11, **dadurch gekennzeichnet, dass** die Silikatpartikel wenigstens zum Teil beim Läutern mit dem Malztreber abgetrennt werden.

13. Verfahren nach einem der Ansprüche 9 bis 12, **dadurch gekennzeichnet, dass** die Silikatpartikel auch beim Filtrieren nach dem Gärprozess abgetrennt werden.

## Claims

1. Use of a particulate material in the production of a beverage, wherein the material particles of said material are added in the course of the production process to a starting material or an intermediate product of the beverage and are then separated off again prior to finishing of the beverage, **characterised in that** the particles of the material are silicate particles, wherein the silicate particles with respect to the total weight of the particles consist of at least 90% by weight of a silicate, wherein the silicate particles with respect to the total weight of the particles have a proportion of the metal ion Ca²⁺ in the range of from 5 to 30% by weight and wherein the silicate particles are enriched with the metal ion Ca²⁺ at their surface, wherein said enrichment leads to silicate particles, wherein with respect to the total proportion of the metal ion Ca²⁺ at least 50% by weight of the metal ion Ca²⁺ are present on the surface.

2. Use according to claim 1 **characterised in that** the silicate particles with respect to the total weight of the particles consist of at least 90% by weight of a sheet silicate.

3. Use according to claim 1 or claim 2 **characterised in that** the silicate particles with respect to the total weight of the particles consist of at least 90% by weight of a montmorillonite clay.

4. Use according to one of claims 1 through 3 **characterised in that** the silicate particles with respect to the total weight of the particles consist of at least 90% by weight of bentonite.

5. Use according to one of the preceding claims **characterised in that** the silicate particles have a BET surface area in the range of between 5 and 850 m²/g.

6. Use according to one of the preceding claims **characterised in that** the silicate particles have a cation exchange capacity (CEC) of between 5 and 100 meq/100g.

7. Use according to one of the preceding claims **characterised in that** the silicate particles with respect to the total weight of the particles have a proportion of Fe (II) <10% by weight.

8. A beer brewing method in which silicate particles are added in the course of the production process to a starting material or an intermediate product of the beverage and are then separated off again prior to finishing of the beverage, **characterised in that** the silicate particles with respect to the total weight of the particles consist of at least 90% by weight of a silicate, wherein the silicate particles with respect to the total weight of the particles have a proportion of the metal ion Ca²⁺ in the range of from 5 to 30% by weight and wherein the silicate particles are enriched with the metal ion Ca²⁺ at their surface, wherein said enrichment leads to silicate particles, wherein with respect to the total proportion of the metal ion Ca²⁺ at least 50% by weight of the metal ion Ca²⁺ are present on the surface.

9. A beer brewing method in which silicate particles are used, **characterised in that** the silicate particles are added to the mash and that the silicate particles with respect to the total weight of the particles consist of at least 90% by weight of a silicate, wherein the silicate particles with respect to the total weight of the particles have a proportion of the metal ion Ca²⁺ in the range of from 5 to 30% by weight and wherein the silicate particles are enriched with the metal ion Ca²⁺ at their surface, wherein said enrichment leads to silicate particles, wherein with respect to the total proportion of the metal ion Ca²⁺ at least 50% by weight of the metal ion Ca²⁺ are present on the surface.

10. A method according to claim 9 **characterised in that** the silicate particles are added to the mash by way of the brewing water.

11. A method according to one of claims 9 or 10 **characterised in that** the silicate particles are also additionally added to the fermentation process.

12. A method according to one of claims 9 through 11 **characterised in that** the silicate particles are at least partially separated off in the purifying step with the spent malt.

13. A method according to one of claims 9 through 12 **characterised in that** the silicate particles are also separated off in the filtering operation after the fermentation process.

## Revendications

1. Utilisation d'un matériau particulaire lors de la fabrication d'une boisson, les particules de ce matériau étant, au cours du processus de fabrication, ajoutées à un matériau de départ ou à un produit intermédiaire de la boisson, et étant ensuite séparées de nouveau avant achèvement de la boisson, **caractérisée en ce que** les particules du matériau sont des particules de silicate qui se composent, sur la base du poids total des particules, d'au moins 90 % en poids d'un silicate, les particules de silicate présentant, par rapport au poids total des particules, une proportion de l'ion métallique Ca²⁺ comprise dans la plage de 5 à 30 % en poids, et les particules de silicate étant sur leur surface enrichies en l'ion métallique Ca²⁺, cet enrichissement conduisant à des particules de silicate dans lesquelles, par rapport à la fraction de l'ion métallique Ca²⁺, au moins 50 % en poids de l'ion métallique Ca²⁺ se trouvent sur la surface.

2. Utilisation selon la revendication 1, **caractérisée en ce que** les particules de silicate se composent, sur la base du poids total des particules, d'au moins 90 % en poids d'un phyllosilicate.

3. Utilisation selon la revendication 1 ou 2, **caractérisée en ce que** les particules de silicate se composent, sur la base du poids total des particules, d'au moins 90 % en poids d'une argile de type montmorillonite.

4. Utilisation selon l'une des revendications 1 à 3, **caractérisée en ce que** les particules de silicate se composent, sur la base du poids total des particules, d'au moins 90 % en poids de bentonite.

5. Utilisation selon l'une des revendications précédentes, **caractérisée en ce que** les particules de silicate présentent une aire BET comprise dans la plage de 5 à 850 m²/g.

6. Utilisation selon l'une des revendications précédentes, **caractérisée en ce que** les particules de silicate présentent une capacité d'échange de cations (CEC) de 5 à 100 méq/100 g.

7. Utilisation selon l'une des revendications précédentes, **caractérisée en ce que** les particules de silicate présentent, par rapport au poids total des particules, une proportion de Fe(II) < 10 % en poids.

8. Procédé de brassage de la bière, dans lequel, au cours du processus de fabrication, on ajoute des particules de silicate à un matériau de départ ou à un produit intermédiaire de la boisson, puis on sépare de nouveau les particules de silicate avant achèvement de la boisson, **caractérisé en ce que** les particules de silicate se composent, sur la base du poids total des particules, d'au moins 90 % en poids d'un silicate, les particules de silicate présentant, par rapport au poids total des particules, une proportion de l'ion métallique Ca²⁺ comprise dans la plage de 5 à 30 % en poids, et les particules de silicate étant sur leur surface enrichies en l'ion métallique Ca²⁺, cet enrichissement conduisant à des particules de silicate dans lesquelles, par rapport à la fraction totale de l'ion métallique Ca²⁺, au moins 50 % en poids de l'ion métallique Ca²⁺ se trouvent sur la surface.

9. Procédé de brassage de la bière dans lequel on utilise des particules de silicate, **caractérisé en ce qu'**on ajoute les particules de silicate au moût, et **en ce que** les particules de silicate se composent, sur la base du poids total des particules, d'au moins 90 % en poids d'un silicate, les particules de silicate présentant, par rapport au poids total des particules, une proportion de l'ion métallique Ca²⁺ comprise dans la plage de 5 à 30 % en poids, et les particules de silice étant sur leur surface enrichies en l'ion métallique Ca²⁺, cet enrichissement conduisant à des particules de silicate dans lesquelles, par rapport à la fraction totale de l'ion métallique Ca²⁺, au moins 50 % en poids de l'ion métallique Ca²⁺ se trouvent sur la surface.

10. Procédé selon la revendication 9, **caractérisé en ce que** les particules de silicate sont ajoutées au moût par l'intermédiaire de l'eau de brassage.

11. Procédé selon l'une des revendications 9 ou 10, **caractérisé en ce que** les particules de silicate sont en outre ajoutées aussi au processus de fermentation.

12. Procédé selon l'une des revendications 9 à 11, **caractérisé en ce que** les particules de silicate sont, au moins en partie, séparées avec les drêches lors de la clarification.

13. Procédé selon l'une des revendications 9 à 12, **caractérisé en ce que** les particules de silicate sont aussi séparées lors de la filtration suite au processus de fermentation.
